# EUROPEAN PATENT APPLICATION

(11) **EP 1 767 101 A1**
(43) Date of publication of application: **28.03.2007**
(21) Application number: 05108886.2
(22) Date of filing: 26.09.2005
(51) Int. Cl.: A23K 1/18, A01K 61/00

(54) **Method to enhance hatching percentage of Artemia diapauzing cysts**

(71) Applicant: Inve Technologies N.V., 9200 Dendermonde (BE)
(72) Inventor: Van Nieuwenhove, Luciaan, Alex, Johan, 11120 Nonthaburi (TH); Naessens-Foucquaert, Eddy, 9840 De Pinte (BE); Rombaut, Geert, 9290 Overmere (Berlare) (BE)
(74) Representative: Van Reet, Joseph

(57) **Abstract**

A method to hatch Artemia nauplii starting from an amount of Artemia cysts, including diapauzing cysts, by incubating the cysts in a hatching medium under conditions allowing at least a portion of the cysts to hatch and to release free swimming nauplii within a predetermined incubation period, in which method the cysts are brought in contact with a compound comprising at least one -(OH)C=C(OH)- structure, to break diapause in at least a number of said diapauzing cysts in order to enable them to produce free swimming nauplii within said predetermined incubation period thereby increasing the hatching percentage of the incubated cysts from X % of the total number of full cysts when the cysts are not brought in contact with said compound, to a hatching percentage higher than X % when they are brought in contact with said compound. An advantage of bringing compounds comprising at least one -(OH)C=C(OH)- structure, in contact with diapauzing cysts is that the range of optimal concentrations of said compound is very broad, so that lethal effects on Artemia will not often occur, even when double or triple amounts of the optimal concentration is applied.

## Description

The present invention relates to a method to hatch Artemia nauplii starting from a amount of Artemia cysts, including diapauzing cysts, by incubating the cysts in a hatching medium under conditions allowing at least a portion of the cysts to hatch and to release free swimming nauplii within a predetermined incubation period, in which method the cysts are brought in contact with a compound to break diapause in at least a number of said diapauzing cysts in order to enable them to produce free swimming nauplii within said predetermined incubation period thereby increasing the hatching percentage of the incubated cysts from X % of the total number of full cysts when the cysts are not brought in contact with said compound to a hatching percentage higher than X % when they are brought in contact with said compound.

Artemia nauplii are commonly used as live food organisms in aquaculture, more particularly as live food for the early larval stages of marine fish and shrimp. The Artemia nauplii as live food are not marketed as such but as Artemia cysts out of which the nauplii can be hatched.

In the encysted embryos or cysts of Artemia the animal's embryonic development is halted (or enters diapauze) at the gastrula stage. As such released by the female into the aquatic environment these diapauzing or dormant embryos will not further develop into free swimming nauplii when subjected to otherwise hatching promoting environmental conditions. Development will only resume when the diapauze controlling mechanisms are de-activated by external stimuli. In the natural environment cold shock (hibernation) and dehydration are known to terminate the diapauze. The thus activated (or quiescent) embryo can resume development when incubation conditions permit.

Diapauzing as well as quiescent cysts can survive long periods of dehydration and anoxia, extreme temperatures and pressure. In the natural environment such resistance is a survival strategy of the species since cysts are often temporarily the only living stage of the animal in a given biotope. Outside their natural environment, when sufficiently dehydrated and properly stored i.e. in a dry environment, preferably at low temperatures and away from light and oxygen, the cysts remain viable for a considerable period of time (several years). This property of prolonged storability and consequent year-round off-the-shelf availability, together with the short incubation time needed to produce the free swimming nauplii makes them the most convenient, least labour-intensive source of live food for aquaculture (Van Stappen, 1996).

Artemia cysts for later aquaculture applications are collected from the natural environment. In such harvested raw product quiescent and diapauzing cysts are present in varying proportions. The dry, ready to use commercial product is obtained after the application of a series of processing and conditioning procedures. In the processing the raw product is purified (removal of debris), washed (removal of salt) and finally dried. Standard conditioning techniques typically try to copy natural conditions of hibernation (storage in cooled warehouses) and/or desiccation (drying with heated air as part of the processing procedures) and mostly result in the de-activation of the diapauze mechanism in virtually all of the individual cysts.

However, many times the hatchability of processed cysts remains poor since the embryo's are not able to proceed to the stage of the free swimming nauplius.

Hatchability is measured as H%, Heff or Houtput and takes into account the final result of the hatching process i.e. the free-swimming nauplius. The hatching percentage (H%) is the number of free swimming nauplii that emerge from 100 full cysts, the hatching efficiency (Heff) is the number of free swimming nauplii that hatch out of one gram of cyst product and the hatching output (Houtput) is the weight of free swimming nauplii that hatch out of one gram of cyst product.

The reasons for which embryo's are sometimes unable to proceed to the stage of the swimming nauplius are mostly related to inadequate incubation conditions. However, factors inherent to the cysts may also cause this problem (e.g.: insufficient amount of stored energy). Further more, in some Artemia strains or in some batches within the same strain a more or less large number of embryo's, although viable, are not able to start the hatching procedure. For such strains or batches the till that moment applied processes or conditioning techniques have obviously failed to de-activate the diapauze in all of the individual cysts and in order to obtain the maximal number of free swimming nauplii, supplementary and more specific diapauze deactivating procedures will be necessary (Van Stappen, 1996).

Described procedures include a.o. prolonged cold storage of dried cysts, repeated hydration-dehydration cycles, short time incubation in a solution of specific chemicals (e.g. hydrogen peroxide). These techniques are strain and batch specific and moreover, the cysts frequently respond in an erratic way. When not properly executed even adverse results are obtained (e.g. incubation in chemical solutions under inadequate time-dose combinations). These techniques are to be applied in addition and after the processing techniques that till that moment had been applied, i.e. by the user of the cysts. They require from the latter a lot of work, skill and sufficient general Artemia background knowledge as well as specific information about the particular strain or batch to be treated. Absence of this will be the origin of mistakes and/or undesirable results. The user-unfriendly nature of these specific, supplementary diapauze de-activating techniques eliminates one of the main advantages of Artemia cysts: a source of readily available fresh food for aquaculture.

A method which enables to treat cysts to increase the hatching percentage thereof without requiring much process steps is disclosed by EP1195088. In this process, hydrogen peroxide is introduced in the hatching medium in an amount selected within the range between 0.5 and 30 mg/l hatching medium wherein the cysts are incubated in a density of maximally about 5g cyst dry matter per litre to increase the hatching percentage from X% of the total number of full cysts when the cysts are not brought in contact with hydrogen peroxide to a value higher than X% when they are brought in contact with hydrogen peroxide.

A drawback of this method is that the hatching in this method depends on the amount of peroxide. More particularly an amount between 0.5 and 30 mg/l, is needed to be introduced in the hatching medium to allow to break diapause in at least a number of the diapauzing Artemia cysts in order to enable such diapauzing cysts to produce free swimming nauplii within the incubation period. At peroxide concentrations lower than the range of optimal peroxide concentration, the hatching does not reach its maximal value, at peroxide concentrations above the range of optimal peroxide concentration the peroxide is toxic to the nauplii and this is reflected in a hatching lower then the maximal value. This range of optimal concentrations is very small and since it also depends on the strain or batch of Artemia, it is therefore necessary to determine by standardized tests the range of optimum peroxide concentrations for each batch or strain before the hydrogen peroxide dosage can be calculated. The determination of this optimum range is a time consuming work, that when not carefully executed can lower hatching percentages.

An object of the present invention is therefore to provide a new method to increase the hatching percentage thereof without the limitation of a narrow range of optimal concentrations that allow the maximal hatching percentage.

To this end, a compound comprising at least one -(OH)C=C(OH)- structure, is introduced in the hatching medium wherein the cysts are incubated to increase the hatching percentage from X % of the total number of full cysts when the cysts are not brought in contact with said compound to a value higher than X % when they are brought in contact with said compound.

The present inventors have found that the introduction of said compound in the hatching medium enables to break diapause in diapauzing cysts and thus to increase the hatching percentage. Surprisingly, in this new method the maximal hatching was obtained within a very large range of concentrations of said compounds contrary to the method described in EP1195088 where maximal hatching was only possible in a narrow range of hydrogen peroxide or hydrogen peroxide producing compounds.

An important advantage of this feature is that when the range of optimal concentrations is determined, it is not that critical to stay close to this optimal concentration. Lethal effects on the Artemia will not often occur, even when double or triple optimal dosages of said compounds are applied.

Another important advantage is that compounds comprising at least one -(OH)C=C(OH)- structure are less aggressive (less oxidative, less flammable) compared to peroxides or the peroxide producing compounds specified in EP1195088, which is less harmful for the labourers in the production facilities of processed cysts or for the farmers, using the cysts.

The invention further relates to Artemia cysts destined to be incubated in a hatching medium to produce free swimming nauplii, which cyst show a hatching percentage of X% of the total number of full cysts when they are hatched in the hatching medium in the absence of compounds comprising at least one -(OH)C=C(OH)- structure. The cysts according to the invention are characterised in that they are combined with an amount of compounds comprising at least one -(OH)C=C(OH)-structure, which amount is sufficient to increases the hatching percentage of the cysts from X% to a hatching percentage higher than X% when this amount of compounds comprising at least one - (OH)C=C(OH)- structure is introduced in the hatching medium.

The advantage of using compounds comprising at least one -(OH)C=C(OH)- structure instead of hydrogen peroxide or the peroxide producing compounds mentioned in EP1195088 is that these specific compounds can be easier dissolved in water without losing its specific activity to enhance the hatching percentage. As a result, they can be more easily brought (coated) on the cysts.

A further advantage is that said compounds adhered to the cysts, still have their specific activity to enhance the hatching percentage when densities of cysts are lower or higher than the usual densities used in common practises.

Another advantage is that when said compounds are introduced in the hatching medium, the bacterial counts on TCBS-Agar is simultaneously suppressed without harming the free swimming Artemia nauplii during or after hatching.

Other particularities and advantages of the invention will become apparent from the following description of some particular embodiments of the hatching and of the packaged cysts according to the present invention. In this description, reference is made to the annexed drawings therein.

In the figures data are given for a commercial available green tea extract containing minimum 98% polyphenols of which at least 50% contained epigallocatechin gallate. This commercial compound is referred to 'EGCG' and the dosage is calculated on mg compound/I or ppm.

Figure 1 is a graph showing the dose related effect of hydrogen peroxide and EGCG added to the hatching medium on the hatching of Artemia cysts including diapauzing cysts. The hatching percentage calculated as the number of hatched nauplii on the total number of nauplii plus umbrellas plus embryos to hatch is referred to H-. The hatching percentage calculated as the number of hatched nauplii plus umbrellas on the total number of nauplii plus umbrellas plus embryos is referred to H+.

Figure 2 is a graph showing the variability of the optimum dose of EGCG between different batches of Artemia cysts including diapauzing cysts.

Figure 3 is a graph showing the effect of the cyst density in the hatching medium on the hatching percentage when EGCG is introduced in the hatching medium versus when it is coated on the cysts.

Figure 4 is a graph showing the microbial counts on Marine Agar (MA) and on TCBS-Agar, 24 hours after introducing 30 mg EGCG /I in the hatching medium.

The present invention generally relates to a method for producing free swimming Artemia nauplii starting from Artemia cysts containing a number of diapauzing cysts. Just like in the conventional hatching methods, the cysts are incubated in a hatching medium under conditions allowing the cysts to hatch and to release free swimming nauplii, usually but not necessarily, within an incubation period of one day (24 hours). The incubation period starts when the dried cysts or the cysts which are stored in brine (wet cysts) are added to a hatching medium which contains at least water, i.e. when the cysts start to hydrate. Since the composition of the hatching medium and the optimal hatching conditions are generally known by the skilled person and described in the literature, in particular in Van Stappen (1996) as mentioned hereabove, no further description need to be given here of this composition and these conditions. It should be noted however that the cysts can also be hatched under conditions which differ somewhat from the optimal conditions. The cysts may for example be hatched at a temperature of less or more than 28 °C, for example at a temperature of about 30 °C or in a hatching medium containing less or more than 35 g of dissolved salts. Although a cyst density of about 2 g/l or somewhat less is preferred under practical conditions, the cyst density may also be lower or higher than 2 g/l.

An essential feature of the method according to the invention is that at least one compound comprising at least one -(OH)C=C(OH)- structure, is introduced in the hatching medium to break diapause in at least a number of the diapauzing Artemia cysts in order to enable also such diapauzing cysts to produce free swimming nauplii. In case the cysts contain a portion of diapauzing cysts, the hatching percentage is increased from X % of the total number of full cysts, when the cysts are hatched in the hatching medium wherein no said compounds have been introduced, to a hatching percentage higher than X % when they are hatched in the hatching medium containing said compounds. It will be clear that in the method according to the invention at least a portion of the diapauzing cysts will hatch but not necessarily all the diapauzing cysts which are added to the hatching medium, although it is preferred that as much as possible of the diapauzing cysts will hatch.

A consequence of a higher hatching percentage in cysts is that when more cysts hatch, more substrate for heterotrophic marine bacteria is released in the hatching medium. Surprisingly, when hatching of cysts is increased by introducing said compound in the hatching medium, the growth of bacteria (mainly Vibrios) is simultaneously suppressed by the same compound in the hatching medium.

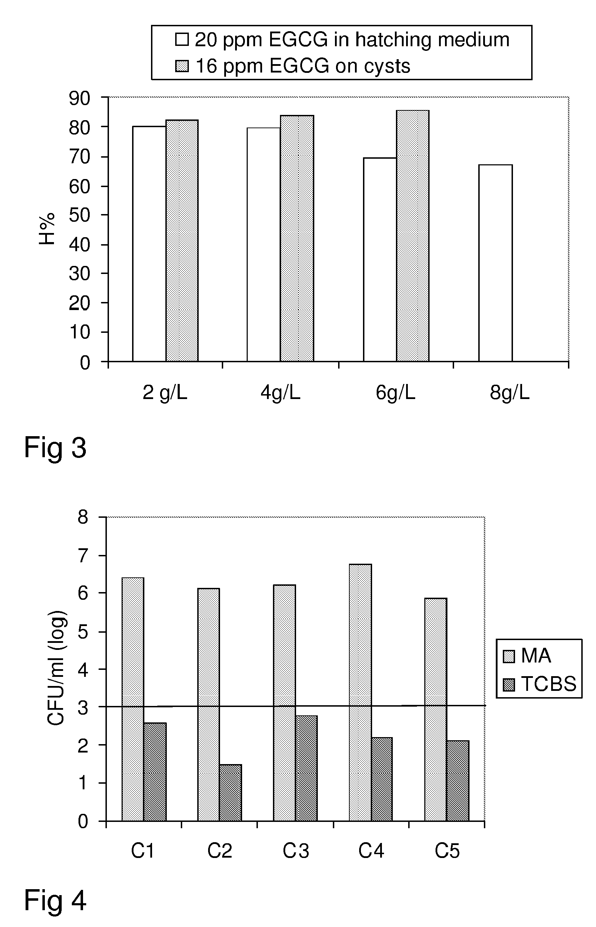

Figure 4 shows the bacterial counts on Marine Agar and TCBS of the hatching medium of five different strains (C1 to C5) of diapausing cysts, which were brought in contact with different concentrations of EGCG, said concentrations chosen in the range that is effective to break diapause in a maximum number of cysts of the specific strain. Bacterial numbers on TCBS (mainly Vibrios) in the hatching medium of non-diapauzing cysts, which hatch at similar hatching percentages as the five used strains of diapausing cysts in Figure 4, but without the use of compounds comprising at least one -(OH)C=C(OH)-structure, are usually higher than 10⁶ CFU / ml after 24 hours of incubation. Surprisingly, when diapauzing cysts are incubated with EGCG, the amount of Vibrio in the hatching medium is significantly reduced (2-4 log units compared to the control) after 24 hours of incubation.

In the method according to the invention, the amount of compounds containing at least one -(OH)C=C(OH)- structure to introduce in the hatching medium, is preferably at least 1 mg /l and more preferably at least 3 mg/l. Best results are obtained when an amount of at least 5 mg compound /I hatching medium is used and most preferably of at least 10 mg compound /I hatching medium. Said amount is to be calculated on the total sum of all different compounds containing at least one -(OH)C=C(OH)- structure, which are introduced in the hatching medium, since in practise some of the products containing said compounds that can be used to increase hatching percentage, comprise a mixture of more than one of said compounds.

The compounds comprising at least one -(OH)C=C(OH)-structure may be introduced in the hatching medium at the beginning of the incubation period, in particular by introducing said compounds in the hatching medium when adding the cysts thereto. As explained hereinafter, this will be the case when said compounds are mixed with the dried cysts. The compounds comprising at least one -(OH)C=C(OH)-structure may also be introduced in the hatching medium before adding the cysts thereto. In that case, the amount of said compounds introduced in the hatching medium is to be understood the amount of said compounds present therein when adding the cysts thereto since, after the addition of said compounds, a portion thereof may have been reacted away.

When the compounds comprising at least one -(OH)C=C(OH)- structure are not introduced simultaneously with the cysts in the hatching medium, it is introduced therein preferably less than 10 hours, and more preferably less than 8 hours, after the start of the incubation period. The best effects on the hatching percentage are achieved when the said compounds are introduced in the hatching medium less than 6 hours and especially less than 5 hours after the start of the incubation period. It will be clear that the total amount of said compounds do not have to be introduced at once in the hatching medium but that it can be introduced therein in several times.

The amount of compounds comprising at least one -(OH)C=C(OH)- structure which is to be introduced according to the invention in the hatching medium in order to obtain the maximum hatching percentages depends from strain to strain or batch to batch of the cysts. It depends among others from the number of diapauzing cysts and especially also from the depth of diapause, i.e. from the diapauzing stage. However, in contrast with the prior art method, in which hydrogen peroxide was used (EP1195088), the range in which the maximum hatching percentage can be reached is much larger so that at least double or triple amounts can be used without any toxic effects on the Artemia nauplii. Moreover, the maximum hatching percentage value is usually even higher than in the method in which hydrogen peroxide is used.

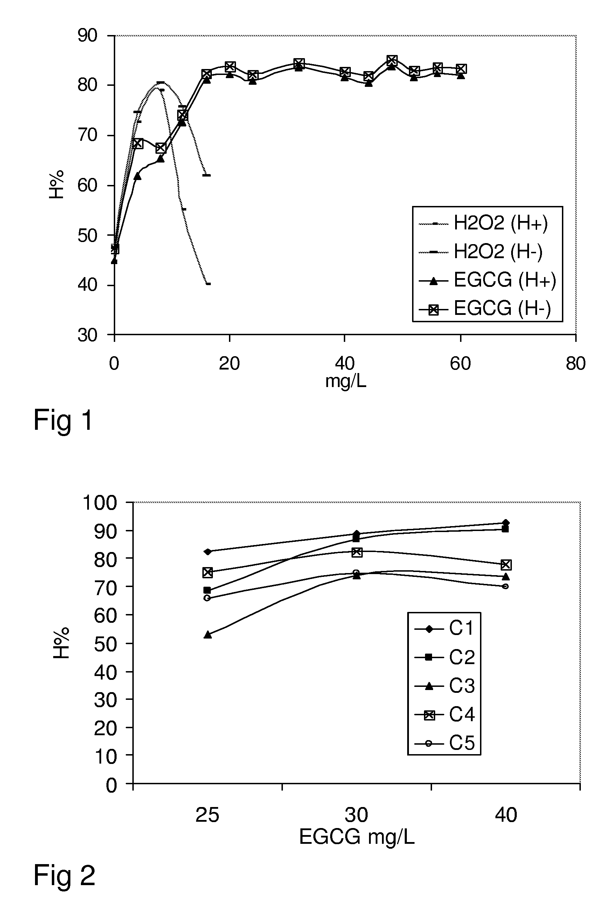

The dose effect of EPGC on the hatching percentage (H+ and H-) versus the dose effect of hydrogen peroxide, is illustrated in Figure 1. In this example, a series of 1 litre cones was used in which 2 g of Artemia cysts, including diapauzing cysts (moisture content: 7.5%) of a same batch were incubated in artificial seawater (25 ppt). The temperature of the water in the cones was kept constant around 30 °C, the water was constantly aerated and illuminated. Different doses of EGCG and hydrogen peroxide (H₂O₂) were added to the hatching medium at the start of the incubation of the cysts. Each treatment was done in triplicate with the treatment's result being the average of the triplicates. From Figure 1 it appears that, in this example, the addition of hydrogen peroxide at 8 mg/L gave the maximum hatching percentage of 78,9%, the maximum hatching percentage for EGCG appeared to be 83,8%. More important, at a concentration of 9 mg peroxides /L, the hatching percentage already decreases considerably. The difference between H- and H+ that appears with a dosage of hydrogen peroxides higher than 8 mg/L demonstrates the toxic effect on the free swimming nauplii. This toxic effect does not appear in the curves of EGCG. At concentrations of 16 mg EGCG /L, the hatching percentage appears to be more than 80% and this stays above 80% even when at least double (40 mg/L) or at least triple (60 mg/L) amounts of EGCG are introduced. The margin for the dose is much broader as it is for hydrogen peroxides, which practically implies that when the process is up-scaled to commercial practices, there will be less risk for over-dosage.

In Figure 2 three different dosages of EGCG are applied in the same experimental conditions as described for Figure 1 for five different strains or batches of Artemia cysts. The maximal hatching percentages differ from strain to strain or batch to batch, but when a dose of for example 30 mg EGCG / L is applied to all the batches without determining the specific concentration for the maximal hatching percentage for each of these batches, still the applied dose had no toxical effect to any of these batches. It is thus not essential to determine the optimal range to get the maximum hatching percentage for each batch or strain of the cysts, but preferably, at least the lower limit of the concentration above which the corresponding hatching percentage is close to the maximum hatching percentage is determined.

The maximum hatching percentage (M%) can be determined by taking a number of samples of the cysts and by hatching these samples under substantially identical conditions (same temperature, salt content, cyst density, etc.), only differing from one another by different amounts of one or more selected compounds comprising at least one -(OH)C=C(OH)- structure, introduced per volume unit therein. Subsequently, the hatching percentages can be determined for the different amounts which gives the possible increase in the hatching percentage, in particular the optimal amount which gives the highest hatching percentage M %, can be selected. Instead of selecting the amount which gives the maximum hatching percentage of M %, it is also possible to select an amount which gives a smaller hatching percentage, in particular a hatching percentage which is at least equal to X % + 0.4*(M - X) % (X % = hatching percentage when no compound comprising at least one -(OH)C=C(OH)- structure is added) and preferably at least equal to X % + 0.6*(M - X) %, an amount corresponding substantially to said amount which gives said maximum hatching percentage of M % being most preferably selected.

In the method according to the invention, use can be made of products comprising one compound comprising a at least one -(OH)C=C(OH)- structure or a mixture of more than one compound comprising at least one -(OH)C=C(OH)- structure, said structure being preferably a part of an aromatic substructure of said compound. More preferably said compounds are selected from the groups containing polyphenols and / or flavonoids, more preferably those polyphenols and / or flavonoids containing a catechol and / or gallol structure.

Examples of such products are commercial available products like green tea extracts, Acacia catechu extract, grape seed extract etc. Said products often contain a mixture of different polyphenols and / or flavonoids in a high percentage.

Polyphenols and flavonoids comprise a large group of secondary plant metabolites. Presently more than 5000 individual compounds are known, which are based on very few core structures. Their multitude derives mainly from the various hydroxylation patterns (up to six hydroxyl groups) and ether substitution by simple methylation or diverse mono- and di-saccharides. Proanthocyanidins mostly occur in green tea (*Camillia sinensis*), grape seeds and skin (*Vitis vinifera*), or cacao (*Theobroma cacao*).

Especially polyphenols and / or flavonoids containing catechol and / or gallol structures make good candidates to enhance the hatching percentage of diapausing cysts. Examples of this group are: catechol, pyrogallol, pyrocatchechol, propyl gallate, lauryl gallate, octyl gallate, methyl catechol, propyl catechol, dihydroxybenzaldehyde, ellagic acid hydrate, dopamine HCl, DL-Isoproterenol sulphate dehydrate, gallacetophenone, rosmarinic acid, benzenetriol and specificially belonging to the group of flavonoids: the group of flavonones like for example: luteolin; the group of flavonols like for example: quercetin, fisetin, myricetin; the group of flavanonols like for example: taxifolin; the group of flavan-3-ols like for example: catechin, epicatechin, epigallocatechin, epicatechin gallate, epigallocatechin gallate and other like cyanidin.

In fact, most flavonoids or polyphenols containing at least one aromatic substructure in the form of a catechol or gallol, are good candidates to enhance the hatching percentage in diapauzing cysts. An overview of flavonoids is to find in the review by Pietta (2000).

In practise a product, mostly a commercial available product, is used that contains a mixture of the compounds mentioned here above. Nevertheless, products comprising no more than one said compound are also available.

In the following example, maximum hatching percentage was achieved on the next products comprising no more than one different compound comprising at least one -(OH)C=C(OH)- structure at the following concentrations :

| | |
|---|---|
| pyrocatechol : | 14 ppm in the hatching medium |
| pyrogallol: | 14 ppm in the hatching medium |
| quercetin: | 30 ppm in the hatching medium |
| methylcatechol: | 15 ppm in the hatching medium |
| propyl gallate: | 40 ppm in the hatching medium |

The cysts which are destined to be used in the method according to the present invention are preferably contained in a package, in particular in a can, and are combined with an amount of compounds which contain at least one -(OH)C=C(OH)- structure. Examples of such compounds are given hereinabove. The amount of the said compound is at least sufficient to introduce the above described amounts of said compounds in the hatching medium when adding the packaged cysts thereto in any density.

Preferably, the amount of said compound is determined such that when the cysts are hatched in the presence of the amount of said compound introduced by this amount in the hatching medium, the hatching percentage is at least equal to X % + 0.4 * (M-X) %, preferably at least equal to X% + 0.6 * (M-X) %, and most preferably substantially equal to M %. As explained already hereabove, M % is the maximum hatching percentage which can be achieved under the applied hatching conditions when introducing an optimal amount of said compound in the hatching medium.

According to the invention, it has been found that the optimal amount of compounds which contain at least one -(OH)C=C(OH)-structure in the hatching medium is strongly dependent from the density of cysts. From the experiments carried out by the inventors it appears indeed that the concentration of said compounds that was introduced in the hatching medium at a cyst density of 2g/l does not cause the same increase in the hatching percentage as when higher cyst densities (for example 6g/l) are used. This means that at a higher cyst density, a higher concentration of said compounds has to be achieved.

Since compounds which contain at least one -(OH)C=C(OH)- structure are more stable and water soluble than hydrogen peroxides, it is easier to mix or coat them on the cysts in a homogeneous way so that when the cysts are incubated in the tanks either in a low (e.g. a density lower than 2g/L) or a high density (e.g.: a density higher than 5g/l), the concentration of said compounds in the hatching medium is still at least the concentration needed to get a higher hatching percentage than when the said compound was not added to the cysts. Hydrogen peroxides or compounds that produced hydrogen peroxides were mostly unstable and thus difficult to be adhered to the cysts. Mostly, these compounds had to be mixed with the cysts, which could lead especially when the cysts were added in high densities, to incorrect concentrations in the hatching medium.

In Figure 3, the advantage of coating the compound on the cysts is visualized. Artemia cysts, including diapauzing cysts, were inoculated in 1 litre cones under the same hatching conditions as described hereinabove for the example illustrated in Figure 1, but in different densities of 2g cysts per litre or more. To one series of cysts, EGCG was added to the hatching medium in a concentration of 20 ppm (20 mg/L) on the same moment when the cysts were incubated. When higher densities of cysts were used and the same amount of EGCG was introduced in the hatching medium, the amount of EGCG was not sufficient to increase the hatching to the maximum hatching percentage (see Figure 3).

In another series, the cysts having a moisture content of 7.5%, were coated with 8 mg EGCG per gram cysts and incubated in the hatching medium. At normal densities (2g/L), this coating gave a concentration of EGCG of 16 ppm (mg/L) in the hatching medium. When higher densities were used, the concentration became higher as well, showing the advantage of coating the compounds on the cysts. At a density of 4g cysts per litre, the concentration of EGCG was 32 ppm (8mg EGCG per g cyst x 4g cysts / litre = 32 mg EGCG per litre hatching medium). When the cysts were incubated in a density of 6g/L, the concentration became 48 mg EGCG per litre hatching medium and the hatching percentage remained in this example above 80%.

The compounds which contain at least one -(OH)C=C(OH)-structure that are combined with the cysts in a package, in particular in a can is preferably added in an amount of at least 1 mg per gram cysts, preferably at least 2 mg/g cysts, more preferably at least 3 mg / g cysts and most preferably at least 5 mg / gram cyst dry matter. In practice cysts are never absolutely dry and consequently, depending on the water content of the cysts (which is typically less then 10%), the corresponding amount of said compounds per gram of practical cysts is somewhat smaller. Said cysts include diapauzing cysts.

The compounds which contain at least one -(OH)C=C(OH)-structure that are combined with the cysts in a package are preferably compounds of which said structure is a part of an aromatic substructure of said compound. These compounds are preferably selected from the group comprising polyphenols and / or flavonoids, particularly polyphenoles and/or flavonoids containing a catechol and / or a gallol structure.

In practise sometimes products comprising a mixture of more than one said compounds are combined with cysts in the package. Practical examples of such products are given here above.

The compounds which contain at least one -(OH)C=C(OH)-structure, can be contained in a further packaging separating this compounds from the cysts and the combination can be sold as such. Preferably, said compound is jointly packaged with the cysts, for example fixed to the outside of the packaging of the cysts. The further packaging may form a separable set with the packaging of the cysts but it is preferably contained, together with the cysts, in the packaging thereof. When a liquid solution is used, it may for example be contained in a glass or plastic vial or vials (bottle) and packed together with the cysts in a can. When use is made of a solid compound, this compound may be mixed directly with the cysts either as a powder or a granulate or in a tablet or other solid shape. Of course, it can also be contained for example in capsules mixed with the cysts. Alternatively, the compounds which contain at least one -(OH)C=C(OH)- structure can further be adhered or in other words coated onto the cysts.

### References :

Pietta, P-G. Reviews: flavonoids as antioxidants. (2000) in: J.Nat. Prod. Vol. 63, p 1035-1042.
Van Stappen, G. Introduction, biology and ecology of Artemia. (1996) in : Manual on the production and use of live food for aquaculture. Edited by Lavens, P. and Sorgeloos, P. Laboratory of Aquaculture and Artemia Reference Center, University of Ghent, Belgium, p. 79-136.

## Claims

1. A method for producing free swimming Artemia nauplii starting from an amount of Artemia cysts, including diapauzing cysts, by incubating the cysts in a hatching medium under conditions allowing at least a portion of the cysts to hatch and to release free swimming nauplii **characterized in that** in which method the cysts are brought in contact with a compound comprising at least one -C(OH)=C(OH)- structure to break diapause in at least a number of said diapauzing cysts in order to enable them to produce free swimming nauplii thereby increasing the hatching percentage of the incubated cysts from X % of the total number of full cysts when the cysts are not brought in contact with said compound to a hatching percentage higher than X % when they are brought in contact with said compound.

2. A method according to claim 1, **characterised in that** the compound containing at least one -C(OH)=C(OH)- structure is introduced in the hatching medium in an amount higher than 1 mg/l, in particular higher than 3 mg/l, more particularly higher than 5 mg/l and most particular higher than 10 mg/l.

3. A method according to claims 1 to 2, **characterised in that** the cysts comprise such an amount of diapauzing cysts that by introducing an optimal amount of a compound comprising at least one -C(OH)=C(OH)- structure in the hatching medium, the hatching percentage can be increased from X % to a maximum hatching percentage of M % and said amount of said compound is selected to increase the hatching percentage from X % to a hatching percentage which is at least equal to X % + 0.4*(M - X) %, and preferably to a hatching percentage which is at least equal to X % + 0.6*(M - X) %.

4. A method according to any one of the claims 1 to 3, **characterised in that** the -C(OH)=C(OH)- structure of the compound is a part of an aromatic substructure of the compound, said compound being preferably selected from the group comprising polyphenols and /or flavonoids, more preferably polyphenoles and/or flavonoids containing a catechol and / or a gallol structure.

5. A method according to any one of the claims 1 to 4, **characterised in that** the compound containing at least one -C(OH)=C(OH)- structure is introduced in the hatching medium less than 10 hours, preferably less than 8 hours, more preferably less than 6 hours and most preferably less than 5 hours after having started to incubate the cysts therein.

6. A method according to claim 5, **characterised in that** said compound is introduced substantially simultaneously with the cysts in the hatching medium, in particular by being mixed with the cysts and/or by being adhered or coated thereon.

7. Artemia cysts destined to be incubated in a hatching medium to produce free swimming nauplii, which cysts show a hatching percentage of X% of the total number of full cysts when they are hatched in the hatching medium in the absence of a compound comprising at least one -(OH)C=C(OH)- structure, **characterised in that** the Artemia cysts are combined with an amount of a compound comprising at least one of -(OH)C=C(OH)- structure, which amount is sufficient to increases the hatching percentage of the cysts from X% to a hatching percentage higher than X% when this amount of said compound is introduced in the hatching medium.

8. Artemia cysts according to claim 7, **characterised in that** said cysts are combined with said compound in an amount of at least 1 mg / g cyst, preferably at least 2 mg / g cysts, more preferably at least 3 mg /g cyst and most preferably at least 5 mg /g cyst.

9. Artemia cysts according to claim 7 or 8, **characterised in that** said cysts comprise such an amount of diapauzing cysts that by introducing an optimal amount of compounds comprising at least one - (OH)C=C(OH)- structure, in the hatching medium, the hatching percentage can be increased from X % to a maximum hatching percentage of M % and said optimal amount of said compound is such that when the cysts are hatched in the presence thereof the hatching percentage is at least equal to X % + 0.4*(M - X) %, and preferably at least equal to X % + 0.6*(M - X) %.

10. Artemia cysts according to anyone of the claims 7 to 9, **characterised in that** the -(OH)C=C(OH)- structure of the compound, which is combined with said cysts, is a part of an aromatic substructure of the compound, said compound being preferably selected from the group comprising polyphenols and / or flavonoids, more preferably polyphenoles and/ or flavonoids containing a catechol and / or a gallol structure.

11. Artemia cysts according to any one of the claims 7 to 10, **characterised in that** the cysts are jointly packaged with said compound comprising at least one -(OH)C=C(OH)- structure.

12. Artemia cysts according to claim 11, **characterised in that** said compound comprising at least one -(OH)C=C(OH)- structure is contained in a further packaging separating this compound from the cysts.

13. Artemia cysts according to claims 7 to 12, **characterised in that** said compound comprising at least one -(OH)C=C(OH)- structure is contained in the same packaging as the cysts and is in particular mixed with the cysts and/or adhered or coated thereto.

14. Use of a compound comprising at least one - C(OH)=C(OH)- structure **characterized in that** said compound is used to increase the hatching percentage in Artemia cysts, more particularly in diapauzing cyst.
